# EUROPEAN PATENT APPLICATION

(11) **EP 1 596 518 A1**
(43) Date of publication of application: **16.11.2005**
(21) Application number: 04711725.4
(22) Date of filing: 17.02.2004
(51) Int. Cl.: H04L 1/00

(54) **MEDIA ENCODED DATA TRANSMISSION METHOD, APPARATUS AND PROGRAM**

(30) Priority: 17.02.2003 JP 2003037648
(71) Applicant: NEC CORPORATION, Minato-ku, Tokyo 108-8001 (JP)
(72) Inventor: HATABU, Atsushi, c/o Nec Corporation, Tokyo108-8001 (JP); OZAWA, Kazunori, c/o Nec Corporation, Tokyo 108-8001 (JP); DEI, Hiroaki, c/o Nec Corporation, Tokyo 108-8001 (JP)
(74) Representative: Betten & Resch
(86) International application number: PCT/JP2004/001713
(87) International publication number: WO 2004/073246

(57) **Abstract**

A media-encoded data transmission method for transmitting media-encoded data stored in a transmitted packet, using a protocol which can store the transmitted packet with an error detecting code calculated from data included in the transmitted packet, and with information for identifying a data portion used in the calculation of the error detecting code includes the steps of previously classifying each of data elements capable of composing a transmission packet into groups in accordance with the magnitude of influence exerted on the reproduction quality on the receiver side by an error associated with the data element, and determining, for each transmission packet, upon creation of each transmission packet for transmission, a data portion which includes all data elements that belong to largely affecting groups in accordance with a predetermined criterion and has the shortest data length, as a data portion for calculating the error detecting code.

## Description

### TECHNICAL FIELD:

The present invention relates to a media-encoded data transmission method for transmitting encoded data of media such as video and audio in packets, and more particularly, to a media-encoded data transmission method and apparatus which can improve the error resilience in media-encoded data transmission by effectively utilizing a packet transmission protocol which can add an error detecting code calculated from part of packet data or all data to the packet data.

### BACKGROUND ART:

In recent years, a number of methods employ compression encoding techniques for efficiently transmitting media data such as video data, audio data and the like. Representative video compression encoding schemes include, for example, MPEG-1, MPEG-2, MPEG-4 schemes. Examples of audio encoding schemes include MPEG-1 Audio Layer 3, MPEG-2 AAC (Advanced Audio Coding), and MPEG-4 AAC. Speech encoding schemes include AMR (Adaptive Multi-Rate) of G.729 3GPP (3rd Generation Partnership Project), and the like.

In media transmissions employing these encoding schemes, data errors and drops inevitably occur in some cases during transmissions of encoded data. For this reason, a large number of so-called error immunity techniques have been developed in order to keep small the influence exerted by transmission errors on the quality of video/audio reproduced on the receiver side. These techniques can be classified into error countermeasures in compression encoding schemes, error countermeasures in transmission protocols, and error countermeasures which is a combination of both.

One example of countermeasures in compression encoding is a data partitioning tool of an MPEG-4 video compression encoding scheme. Using this tool, data elements which make up an encoded data sequence called a video packet are arranged in an order in which the elements exert larger influences on the quality of decoded images when the elements suffer from transmission errors. When video packet data is created in such an arrangement, encoded data located near the head can be correctly decoded with a high probability even if transmission errors occur, so that a degradation in the quality of decoded images due to the transmission errors can be made least possible conspicuous.

An example of error countermeasures taken in a transmission protocol is a UDP (User Datagram Protocol)-Lite protocol. UDP-Lite is a transport layer protocol which has been proposed as a draft for IPv6 that is a new version of the Internet Protocol (IP).

UDP-Lite is extended on the basis of a UDP protocol. UDP is a transport layer protocol defined by RFC (Request for Comment)-768, and is a protocol which is utilized for performing media transmissions in the current IP. Unlike TCP (Transmission Control Protocol) used in general data communications, UDP does not perform a re-transmission when a packet drops or errors occur in packets, so that it is utilized in applications which cannot permit an increase in unnecessary traffic and a delay time associated with a packet re-transmission.

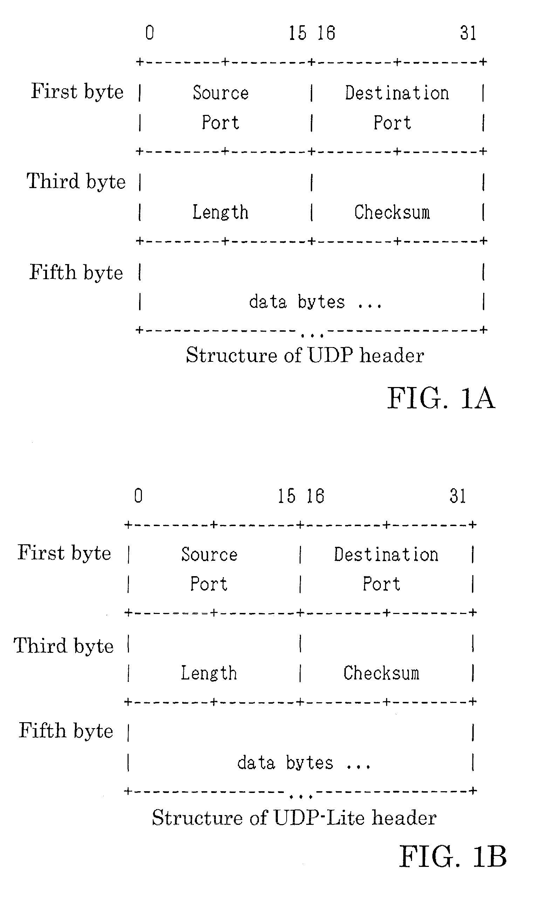

In the following, UDP and UDP-Lite will be described in order. Fig. 1A shows the structure of a UDP packet. This packet stores a source port number, a destination port number, a packet length (Length), and an error detecting code (Checksum) from the head, and stores data on upper layers of UDP including multimedia-encoded data from the fifth byte onward. The error detecting code is a 16-bit checksum calculated from all packet data, such that the receiver side can detect transmission errors by checking the checksum in received UDP packets.

In an exemplary application of a multimedia transmission system, as a transmission error is detected on the receiver side by checking the checksum of received UDP packets, the UDP packets are discarded without decoding the media-encoded data provided therein. Also, in order to prevent the quality of reproduced video and audio from being significantly degraded due to missing encoded data, instructions are sent to a media decoding processing unit within a receiver for performing error concealment processing for making errors in reproduced data less conspicuous, and for stopping the reproduction until the decoding quality is recovered.

However, it is not preferable in some cases that packets including transmission errors are all discarded on the receiver side. This is because even if all packets cannot be correctly received, encoded data which significantly affects the reproduction quality, i.e., which are in a highly error sensitive portion, if available, can be appropriately used, in some cases, to create reproduced data which makes errors less conspicuous. For example, in video packets which are encoded using the data partitioning in MPEG-4, even if errors occur in orthogonal transform coefficients which have a low error sensitivity, a motion vector and a DC component of the orthogonal transform coefficients, which have a high error sensitivity, can be used, if correctly received, to create a decoded image in which errors are not conspicuous.

However, errors can be made less conspicuous only when encoded data have been received without errors in a highly error sensitive portion. If encoded data which includes errors in a highly error sensitive portion is decoded, significantly degraded media data will be reproduced. In UDP, a checksum is calculated from all packet data, so that when errors are detected, it is unknown whether or not encoded data in a highly error sensitive portion has been received without errors. As a prior art technique related to error immunity techniques, JP, P2001-7775A, for example, has proposed that data in transmitted packets are divided into an important portion and a remaining portion, such that the important portion is doubly encoded with a first and a second error correcting code, while the non-important portion is encoded with the second error correcting code. Using this technique, when errors are detected in packet data, it is possible to identify whether or not errors exist in the encoded data in a highly error sensitive portion. However, since the data is encoded multiple times with a plurality of error encoding codes, a problem arises in an increase in redundancy of the data.

Thus, UDP is simply extended to create a protocol which has been proposed as UDP-Lite. Fig. 1 B shows the structure of a UDP-Lite packet. The UDP-Lite packet differs from the UDP packet shown in Fig. 1A in that the Length field is replaced with a Checksum Coverage field. Checksum Coverage indicates data subjected to checksum, which was used by the transmitter side to calculate the checksum, as the number of bytes from the head of the packet. Therefore, in UDP-Lite, the checksum can be calculated not only from all data in the packet but also from part of data located at the head of the packet.

In a media transmission system which suitably employs UDP-Lite, packet data of UDP-Lite is created such that highly error sensitive data elements are intended for the calculation of the checksum within data elements which make up the packet, and lowly error sensitive data elements are minimally included in those intended for the checksum, and the packet data is transmitted. On the receiver side, by checking the checksum, received packet data is discarded only when transmission errors are detected in received UDP-Lite packets, and an action is taken to make errors less conspicuous. As a result, since highly error sensitive data elements are not discarded due to transmission errors in lowly error sensitive data elements, concealment processing can be performed to make errors less conspicuous on the receiver side to improve the quality of decoded data, as compared with the calculation of a checksum from all data in packets. Also, since errors occurring in highly error sensitive data elements are detected by checking the checksum, the reproduction quality will not be largely compromised.

In this way, the immunity to transmission errors can be increased utilizing UDP-Lite by setting appropriate values in the Checksum Coverage field and Checksum field, while transmitting media-encoded data in packets.

When the UDP-Lite protocol is used, encoded data may be rearranged in an order from the highest error sensitivity before they are packetized, as the data partitioning tool of MPEG-4, in order to effectively increase the error immunity.

However, in a system which transmits media-encoded data such as video, audio and the like using UDP-Lite or a protocol similar to UDP-Lite, there has been proposed no effective and definite method of how to determine the length of a data portion which is subjected to the error detection in order to increase the error immunity.

While a typical method would involve previously classifying data elements, which make up packets, into highly error sensitive data elements and lowly error sensitive data elements, and employing a minimum data portion including the highly error sensitive data elements in the error detection, such a method cannot determine a data portion subjected to the error detection in a form suitable for individual packets to be transmitted.

### DISCLOSURE OF THE INVENTION:

It is an object of the present invention to provide a media-encoded data transmission method which is capable of increasing a transmission error immunity by appropriately setting the length of partial data subjected to an error detection when media-encoded data such as video, audio and the like is transmitted in packets.

It is another object of the present invention to provide a media-encoded data transmission apparatus which is capable of increasing a transmission error immunity by appropriately setting the length of partial data subjected to an error detection when media-encoded data such as video, audio and the like is transmitted in packets.

The first object of the present invention is achieved by a media-encoded data transmission method for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code. The method includes the steps of previously classifying each of data elements capable of composing a transmission packet into *n* (*n* is a predefined positive integer equal to or larger than two) groups in accordance with the magnitude of influence exerted on the reproduction quality on the receiver side by an error associated with the data element, and upon creation of each transmission packet for transmission, determining, for each transmission packet, a data portion which includes all data elements that belong to largely affecting groups in accordance with a predetermined criterion and has the shortest data length as a data portion for calculating the error detecting code.

The second object of the present invention is achieved by a media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code. The apparatus includes a classification table for indicating which of *n* (*n* is a predefined positive integer equal to or larger than two) groups each of data elements capable of composing a transmission packet belongs to in accordance with the magnitude of influence exerted on the reproduction quality on the receiver side by an error associated with the data element, detecting means for detecting, for each of the transmission packets, groups included in the transmission packet with reference to the classification table, and determining means for determining, for each transmission packet, a data portion which includes all data elements that belong to largely affecting groups in accordance with a predetermined criterion and has the shortest data length, based on the result of the detection by the detecting means, as a data portion for calculating the error detecting code.

In the present invention, groups included in data for calculating an error detecting code are dynamically determined for each of packets to be transmitted, in accordance with a combination of groups to which data elements included in the transmission packet belong, so that a data portion subjected to an error detection can be determined in a form suitable for each packet to be transmitted. Specifically, according to the present invention, an error detecting code is calculated from relatively highly error sensitive data within packet data to be transmitted, and stored in the packet, so that the receiver side can be prevented from decoding received encoded data, though highly error sensitive data elements are in error, to perform reproduction with a significantly degraded quality. Also, by avoiding the calculation of the error detecting code from lowly error sensitive data elements, it is possible to keep low the probability of discarding highly error sensitive data elements due to a transmission error in the lowly error sensitive data elements. Further, the error detecting code is calculated and stored in a form suitable for each of packets to be transmitted. As a result of the foregoing, it is possible to suppress a degradation in media reproduction quality which is caused by a transmission error of packets which include media-encoded data.

### BRIEF DESCRIPTION OF THE DRAWINGS:

Fig. 1A is a diagram showing the structure of a packet according to the UDP protocol;
Fig. 1B is a diagram showing the structure of a packet according to the UDP-Lite protocol;
Fig. 2 is a block diagram illustrating a main portion of a media-encoded data transmission apparatus based on a first embodiment of the present invention;
Fig. 3 is a diagram showing an example of a classification table for use in the apparatus illustrated in Fig. 2;
Figs. 4A to 4C are diagrams each showing a data portion for calculating an error detecting code, determined for each packet in the apparatus illustrated in Fig. 2;
Fig. 5 is a diagram showing an example of a classification table for use in a media-encoded data transmission apparatus according to a second embodiment of the present invention;
Figs. 6A to 6C are diagrams each showing a data portion for calculating an error detecting code, determined for each packet in the apparatus of the second embodiment;
Fig. 7 is a diagram showing an example of a classification table for use in a media-encoded data transmission apparatus according to a third embodiment of the present invention;
Figs. 8A to 8C are diagrams each showing a data portion for calculating an error detecting code, determined for each packet in the apparatus of the third embodiment;
Fig. 9 is a diagram showing an example of a classification table for use in a media-encoded data transmission apparatus according to a fourth embodiment of the present invention;
Figs. 10A to 10C are diagrams each showing a data portion for calculating an error detecting code, determined for each packet in the apparatus of the fourth embodiment;

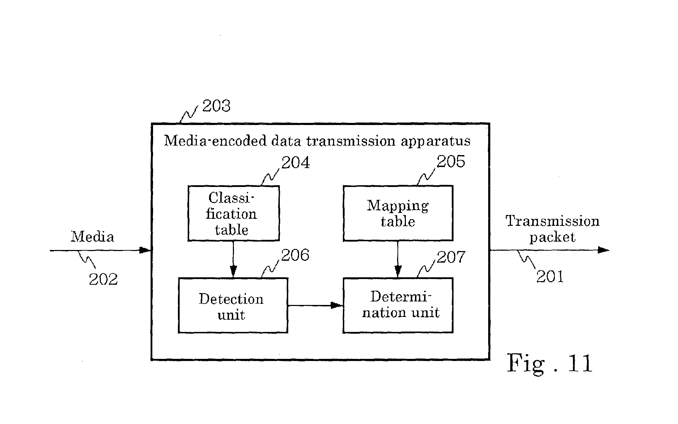

Fig. 11 is a block diagram illustrating a main portion of a media-encoded data transmission apparatus according to a fifth embodiment of the present invention;
Fig. 12 is a diagram showing an example of a mapping table for use in the apparatus illustrated in Fig. 11;
Fig. 13 is a block diagram illustrating the configuration of a video/audio encoding/transmission system in Example 1 of the present invention;
Fig. 14 is a block diagram illustrating the configuration of a video/audio encoding/transmission apparatus in the video/audio encoding/transmission system in Example 1;
Fig. 15 is a diagram showing a classification table for use in the video/audio encoding/transmission apparatus in Example 1;
Fig. 16 is a flow chart illustrating an exemplary process for determining a data portion for calculating an error detecting code in the video/audio encoding/transmission apparatus in Example 1;
Figs. 17A to 17C are diagrams each showing an example of data elements and a determined error detection involved data length (Checksum Coverage) in Example 1; and
Fig. 18 is a diagram showing a mapping table which represents a correspondence relationship between a combination of truth/false as to whether or not a group is included in a packet, and a group included in data subjected to an error detection in Example 2 of the present invention.

### BEST MODE FOR CARRYING OUT THE INVENTION:

### First Embodiment:

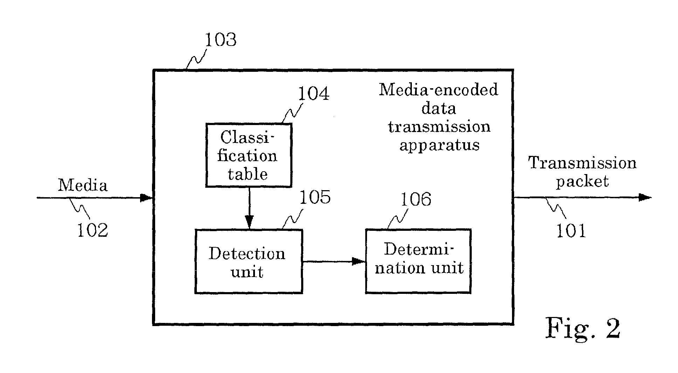

Media-encoded data transmission apparatus 103 according to a first embodiment of the present invention, illustrated in Fig. 2, stores data encoded with media 102 in transmitted packet 101 for transmission using UDP-Lite or a protocol similar to this which can store, in transmitted packet 101, an error detecting code calculated from part or all of data included in transmitted packet 101 and information for identifying, on the receiver side, a data portion used in the calculation of the error detecting code. Media-encoded data transmission apparatus 103 comprises classification table 104, detection unit 105, and determination unit 106.

Classification table 104 is a table for indicating, for each of data elements which can make up transmission packet 101, which of *n* (*n* is a predefined positive integer equal to or larger than two) groups ordered from the highest error sensitivity, the data element is classified into in accordance with the magnitude of influence exerted on the reproduction quality on the receiver side by an error in that data element, i.e., in accordance with the level of error sensitivity.

Detection unit 105 detects, for each of transmission packets 101, groups included in that transmission packet 101 with reference to classification table 104. Determination unit 106 determines, for each of transmission packets 101, a data portion which includes all data elements belonging to upper *m* (*m* is a predefined positive integer equal to or larger than one and equal to or smaller than *n*-1) groups included in that transmission packet 101, based on the result of the detection by the detection unit 105, as a data portion for calculating an error detecting code.

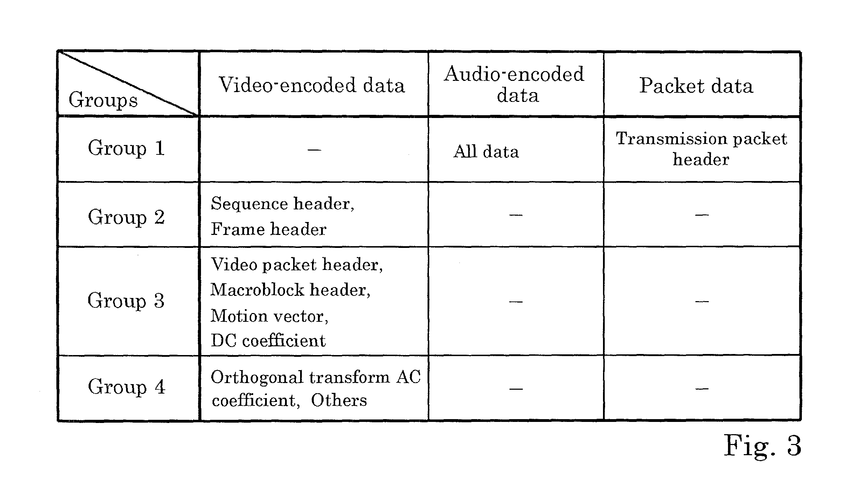

Fig. 3 shows an example of classification table 104 when video data and audio data are treated as media 102, where *n*=4. Since transmission packet headers (for example, UDP-Lite header and RTP header) belong to Group 1 because they are the most important. In regard to video-encoded data, a video sequence header (for example, a header called Visual Object Sequence Header, Visual Object Header, Visual Object Layer Header or the like in the MPEG-4 Visual scheme) which is a header for storing information on an entire video sequence, and a frame header (for example, Visual Object Plane Header: VOP header in the MPEG-4 Visual scheme) which is a header for storing information on an entire frame are included in Group 2, whereas a video packet header which is a header related to an entire video packet, a macroblock header which is a header related to an entire macroblock, and a direct current (DC) component of orthogonal transform coefficients are included in Group 3. An alternating current (AC) component of the orthogonal transform coefficients belongs to Group 4. All audio-encoded data belongs to Group 1.

Based on the classification table shown in Fig. 3, detection unit 105 detects, for each of transmitted packets 101, groups included in that transmission packet 101, and determination unit 106 determines, for each of transmitted packets 101, a data portion which includes all data elements belonging to upper m groups of the groups included in that transmitted packet 101, and has the shortest data length, based on the result of the determination, as a data portion for calculating an error detecting code.

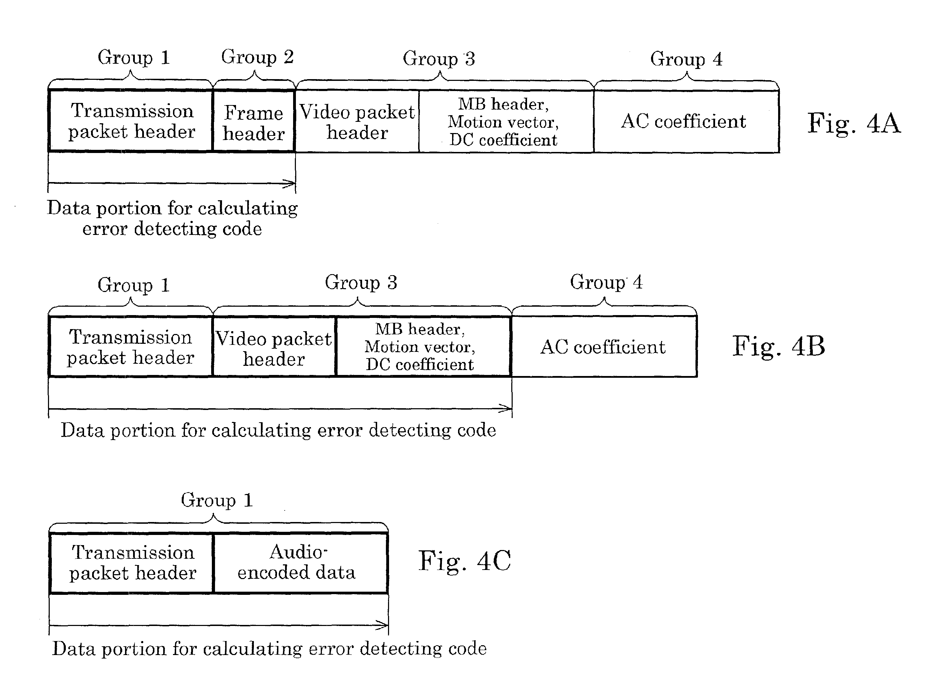

Figs. 4A to 4C are diagrams showing examples of the data portion for calculating the error detecting code, determined on a packet-by-packet basis, when m is two. Fig. 4A is an example of a packet which includes all groups and sub-groups. First, a data portion for calculating an error detecting code includes a transmission packet header belonging to Group 1, and includes a header belonging to Group 2 included in the packet. In the shown example, out of a video sequence header and a frame header, a header belonging to Group 2 includes the frame header. A video packet header, a macroblock header, a motion vector, and a DC coefficient belonging to Group 3, and an AC coefficient belonging to Group 4 are not selected for the data portion for calculating the error detecting code because Groups 3, 4 are not upper m (=2) groups.

Fig. 4B is an example in which the frame header belonging to Group 2 is removed from the packet shown in Fig. 4A. Unlike the one shown in Fig. 4A, since Group 3 is included in the upper m (=2) groups in Fig. 4B, the video packet header, macroblock header, motion vector, and DC coefficient belonging to Group 3 are included in the data portion for calculating the error detecting code.

Fig. 4C is an example of a transmission packet which stores audio data, wherein the entire packet is intended for the error detection because all data elements composing the packet belong to Group 1. The size of the data portion for calculating the error detecting code is equal to the length of the packet.

Consider herein that a transmission error occurs on a transmission path in transmitting the three types of packets illustrated in Figs. 4A to 4C so that correct packet data cannot be received on the receiver side.

If a transmission error occurs in data elements in Group 1 or Group 2 during a transmission of the packet shown in Fig. 4A, this error is detected by the error detecting code, so that the received packet is discarded, and processing is performed in order to make the error less conspicuous. In this event, the transmitted packet includes the error in the transmission packet header or frame header which is highly error sensitive. If such a packet is decoded, the packet cannot at all be decoded, or an excessively disturbed video/audio signal is generated, but such events can be prevented by using the transmission apparatus according to this embodiment.

If a transmission error does not occur in data elements in Group 1 and Group 2 but an error occurs in data elements in Group 3 during a transmission of the packet shown in Fig. 4A, the received packet is decoded without detecting this error. In this event, since the received packet includes the error in any or a plurality of the highly error sensitive video packet header, macroblock header, motion vector, and DC coefficient, a disturbed video/audio signal is reproduced. However, if this received packet is discarded, the frame header belonging to Group 2, which is more important than Group 3, is also discarded. This influence can be exerted not only on the currently received packet but also on subsequently received packets, resulting in significant disturbance continuing for a while. In this embodiment, it is understood that while large disturbance occurs in reproduced data, the disturbance is localized.

If transmission errors do not occur in respective data elements in Group 1, Group 2, and Group 3, but an error occurs in data elements of Group 4 during a transmission of the packet shown in Fig. 4A, the received packet is decoded without detecting this error. In this event, the received packet includes the error only in the lowly error sensitive AC coefficient, but does not include any error in higher error sensitive portions. In this event, while a decoded image is disturbed due to the influence of the erroneous AC coefficient, the disturbance is relatively small. The immunity to transmission errors is high in comparison with the case where errors are detected in the entire packets, and the frame header is discarded to cause significant disturbance in a reproduced image.

If a transmission error occurs in a data element in Group 1 or Group 3 during a transmission of the packet shown in Fig. 4B, this error is detected by the error detecting code, so that the received packet is discarded, and the processing is performed to make the error less conspicuous. In this event, the received packet includes the error in any or a plurality of the highly error sensitive video packet header, macroblock header, motion vector, and DC coefficient, so that if this data is decoded, a reproduced video/audio signal suffers from significant disturbance. In this embodiment, however, such an event will not occur.

If no transmission error occurs in the data elements in Group 1 and Group 3 but an error occurs in the data element in Group 4 during a transmission of the packet shown in Fig. 4B, the received packet is decoded without detecting this error. In this event, the error is included only in the lowly error sensitive AC coefficient, but no error is included in more highly error sensitive portions. In this event, while a decoded image suffers from disturbance due to the influence of the erroneous AC coefficient, the disturbance is relatively small, so that a decoded image can be produced using the correctly transmitted video packet header, macroblock header, motion vector, and DC coefficient to make the error less conspicuous.

When an error occurs during a transmission of the packet shown in Fig. 4C, this error is detected, so that the received packet is discarded, and compensation processing is performed to maximally reduce the influence. In this way, it is possible to prevent an extraneous sound produced by decoding the erroneous audio-encoded data.

As described above, in the first embodiment, the video sequence header and frame header, which affect the decoding of not only one but a plurality of video packet data, are not discarded due to a transmission error in the rest of video-encoded data. In addition, the error detecting code for the highly error sensitive video packet header, macroblock header, motion vector, DC coefficient and the like within the remaining video-encoded data is added, only when the video sequence header or frame header is not included, to prevent these data elements from erroneously being decoded, and to prevent all video-encoded data from being discarded due to a transmission error in the remaining lowly error sensitive data elements. As a result of the foregoing, it is possible to add an error detecting code suitable for the structure of individual transmitted packet data to increase the immunity to the transmission error.

### Second Embodiment:

A media-encoded data transmission apparatus according to a second embodiment of the present invention is similar in configuration to the media-encoded data transmission apparatus of the first embodiment illustrated in Fig. 2, but the contents of classification table 104 are different from those of the first embodiment, and the contents of the processing in determination unit 106 are also different from those in the first embodiment.

In the second embodiment, classification table 104 is a table for indicating, for each of data elements which can make up transmission packet 101, which of the highest ranked first group, the second highest ranked second group, and the lowest ranked third group, the data element is classified into in accordance with the magnitude of the influence exerted on the reproduction quality on the receiver side by an error associated with the data element, i.e., in accordance with the level of error sensitivity, and which of *n* (*n* is a predefined positive integer equal to or larger than two) sub-groups ordered from the one having the highest error sensitivity, each of data elements, which have been classified into the second group, is classified into.

Detection unit 105 detects, for each of transmitted packets 101, groups included in that transmission packet with reference to classification table 104. Determination unit 106 determines, for each of transmission packets 101, a data portion which includes all of data elements belonging to the first group included in that transmitted packet 101, and data elements belonging to upper *m* (*m* is a predefined positive integer equal to or larger than one and equal to or smaller than *n*-1) sub-groups in the second group included in that transmission packet 101, and has the shortest data length, as a data portion for calculating an error detecting code.

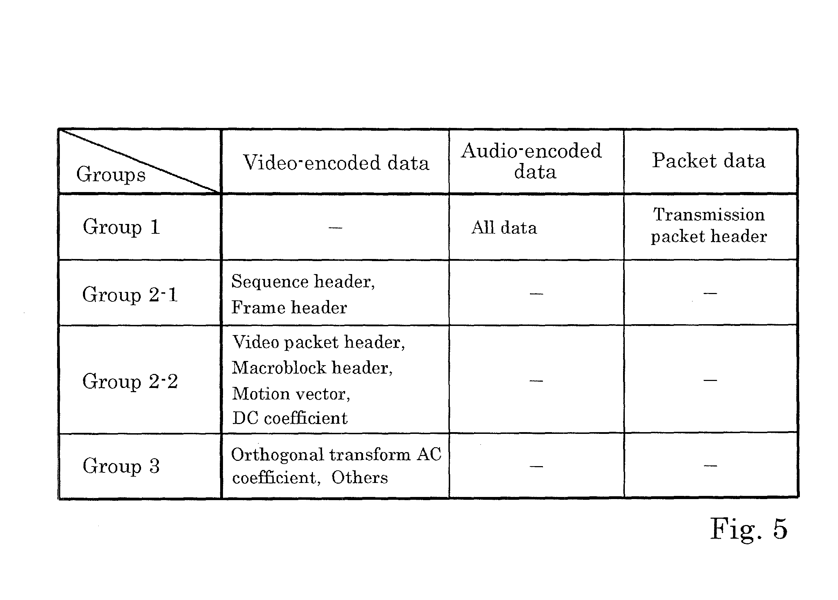

Fig. 5 shows an example of classification table 104 in the second embodiment when video data and audio data are treated as media 102, where *n*=2. Since a transmission packet header is the most important, it belongs to Group 1. In regard to video-encoded data, a video sequence header and a frame header are included in the first sub-group of Group 2, and a video packet header, a macroblock header, a motion vector, and a DC component of orthogonal transform coefficients are included in the second sub-group of Group 2. An AC component of the orthogonal transform coefficients belongs to Group 3. Audio-encoded data belongs to Group 1.

Based on the classification table shown in Fig. 5, detection unit 105 detects, for each of transmission packets 101, groups included in that transmission packet 101, and determination unit 106 determines, for each of transmission packets 101, a data portion which includes all of data elements belonging to the first group included in that transmission packet 101, and data elements belonging to upper m sub-groups of the second group included in that transmission packet 101, and has the shortest data length, based on the result of the detection, as a data portion for calculating an error detecting code.

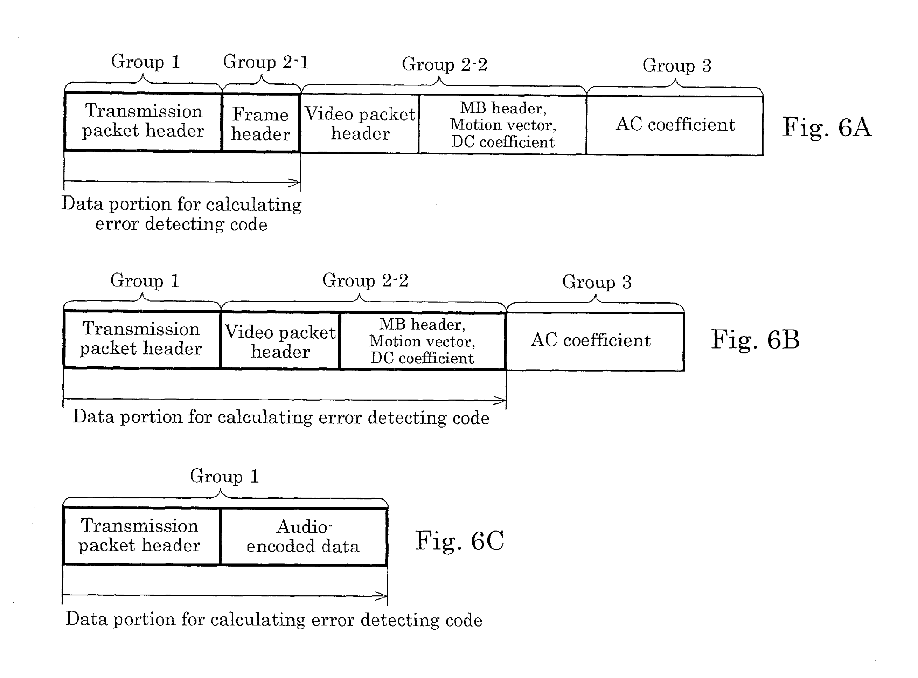

Figs. 6A to 6C each show a data portion for calculating an error detecting code, determined for each packet, when *m*=1. Fig. 6A shows an example of a packet which includes all the groups and sub-groups. First, a data portion for calculating an error detecting code includes the transmission packet header belonging to Group 1, and a header belonging to the highest ranked sub-group 2-1 of sub-group 2-1 and sub-group 2-2 included in the packet. In the shown example, out of a video sequence header and a frame header, the header belonging to sub-group 2-1 includes the frame header. The video packet header, macroblock header, motion vector, and DC coefficient belonging to sub-group 2-2 are not selected for the data portion for calculating the error detecting code because the data elements belonging to sub-group 2-1 are included in the packet. The AC coefficient belonging to Group 3 is not selected for the data portion for calculating the error detecting code.

Fig. 6B shows an example which excludes the frame header belonging to sub-group 2-1 from the packet shown in Fig. 6A. Unlike Fig. 6A, since sub-group 2-1 does not exist in the packet, the video packet header, macroblock header, motion vector, and DC coefficient, which belong to sub-group 2-2, are included in the data portion for calculating the error detecting code.

Fig. 6C shows an example of a packet which stores audio data, wherein all the data elements which make up the packet belong to Group 1, so that the entire packet is subjected to an error detection. The size of the data portion for calculating the error correcting code is equal to the length of the packet.

As is apparent from a comparison of Figs. 6A to 6C with Figs. 4A to 4C, the data portion for calculating the error detecting code in each of the packets in Figs. 6A to 6C is the same as that in the first embodiment. Therefore, the second embodiment can also provide similar advantages to the first embodiment.

### Third Embodiment:

A media-encoded data transmission apparatus according to a third embodiment of the present invention is similar in configuration to the media-encoded data transmission apparatus of the first embodiment illustrated in Fig. 2, but the contents of classification table 104 are different from those of the first embodiment, and the contents of the processing in determination unit 106 are also different from those in the first embodiment.

In the third embodiment, classification table 104 is a table for indicating, for each of data elements which can make up transmission packet 101, which of a highly ranked first group and a lowly ranked second group the data element is classified into in accordance with the magnitude of the influence exerted on the reproduction quality on the receiver side by an error associated with the data element, i.e., in accordance with the level of error sensitivity, and which of *n* (*n* is a predefined positive integer equal to or larger than two) sub-groups ordered from the one having the highest error sensitivity, each of data elements, which have been classified into the second group, is classified into.

Detection unit 105 detects, for each of transmitted packets 101, groups included in that transmission packet 101 with reference to classification table 104. Determination unit 106 determines, for each of transmission packets 101, a data portion which includes all of data elements belonging to the first group included in that transmission packet 101, and data elements which belong to upper *m* (*m* is a predefined positive integer equal to or larger than one and equal to or smaller than *n*-1) sub-groups of the second group included in that transmission packet 101, and has the shortest data length, based on the result of the detection by detection unit 105, as a data portion for calculating an error detecting code.

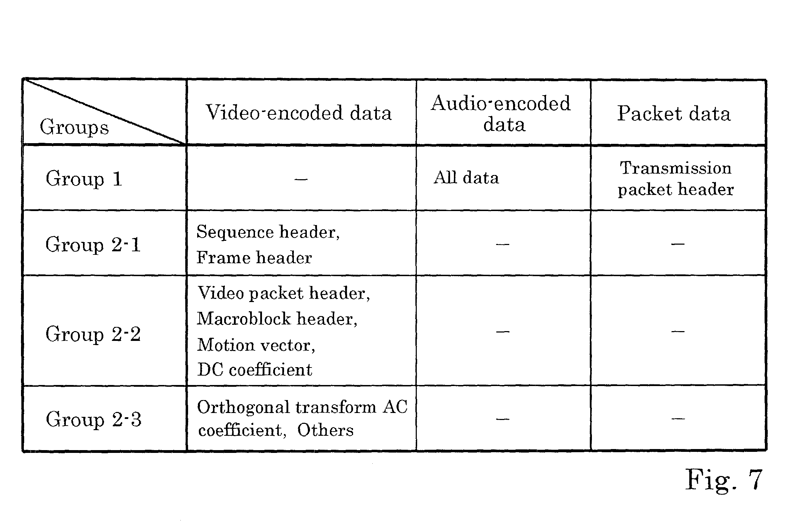

Fig. 7 shows an example of classification table 104 when video data and audio data are treated as media 102, where *n*=3. Since the transmission packet header is the most important, it belongs to Group 1. In regard to the video-encoded data, all is included in Group 2, wherein more important video sequence header and frame header are included in sub-group 2-1, next more important video packet header, macroblock header, motion vector, and DC component of the orthogonal transform coefficients are included in sub-group 2-2. The AC component of the orthogonal transform coefficients belongs to sub-group 2-3. All audio-encoded data belongs to Group 1.

Detection unit 105 detects, for each of transmission packets 101, detects groups included in that transmitted packet 101 based on classification table 104 shown in Fig. 7, and determination unit 106 determines, for each of transmitted packets 101, a data portion which includes all of data elements belonging to the first group included in that transmission packet 101, and data elements belonging to upper *m* sub-groups of the second group included in that transmission packet 101, and has the shortest data length, based on the result of the detection, as a data portion for calculating an error detecting code.

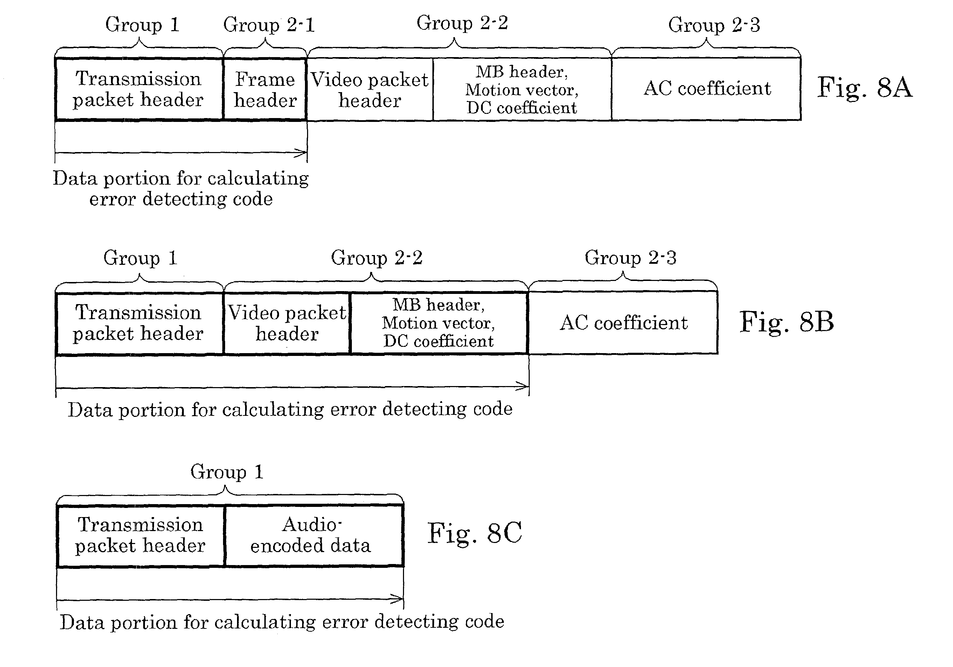

Figs. 8A to 8C each show a data portion for calculating an error detecting code, determined for each packet, when *m*=1. Fig. 8A is an example of a packet which includes all the groups and sub-groups. First, the data portion for calculating the error detecting code includes the transmission packet header belonging to Group 1, and also includes the header belonging to sub-group 2-1 included in the packet. In the shown example, out of a video sequence header and a frame header, sub-group 2-1 includes the frame header. The video packet header, macroblock header, motion vector, and DC coefficient belonging to sub-group 2-2, and the AC coefficient belonging to sub-group 2-3 are not selected for the data portion for calculating the error detecting code, because sub-groups 2-2, 2-3 are not the upper *m* (=1) sub-group.

Fig. 8B shows an example which excludes the frame header belonging to sub-group 2-1 from the packet shown in Fig. 8A. Unlike the one shown in Fig. 8A, since sub-group 2-2 is included in the upper *m* (=1) sub-group, the video packet header, macroblock header, motion vector, and DC coefficient belonging to sub-group 2-2 are included in the data portion for calculating the error detecting code.

Fig. 8C shows an example of a packet which stores audio data, where all data elements which make up the packet belong to Group 1, so that the entire packet is subjected to an error detection. The size of the data portion for calculating the error detecting code is equal to the length of the packet.

As is apparent from a comparison of Figs. 8A to 8C with Figs. 4A to 4C, the data portion for calculating the error detecting code in each of the packets in Figs. 8A to 8C is the same as that in the first embodiment. Therefore, the third embodiment can also provide similar advantages to the first embodiment.

### Fourth Embodiment:

A media-encoded data transmission apparatus according to a fourth embodiment of the present invention is similar in configuration to the media-encoded data transmission apparatus of the first embodiment illustrated in Fig. 2, but the contents of classification table 104 are different from those of the first embodiment, and the contents of the processing in determination unit 106 are also different from those in the first embodiment.

In the fourth embodiment, classification table 104 is a table for indicating, for each of data elements which can make up transmission packet 101, which of a highly ranked first group and a lowly ranked second group the data element is classified into in accordance with the magnitude of the influence exerted on the reproduction quality on the receiver side by an error associated with the data element, i.e., in accordance with the level of error sensitivity, and which of *n* (*n* is a predefined positive integer equal to or larger than two) sub-groups ordered from the one having the highest error sensitivity, each of data elements, which have been classified into the first group, is classified into.

Detection unit 105 detects, for each of transmission packets 101, groups included in that transmission packet 101 with reference to classification table 104. Determination unit 106 determines, for each of transmission packets 101, a data portion which includes all of data elements belonging to upper *m* (*m* is a predefined positive integer equal to or larger than one and equal to or smaller than *n*-1) sub-groups of the first group included in that transmission packet 101, and has the shortest data length, based on the result of the detection by detection unit 105, as a data portion for calculating an error detecting code.

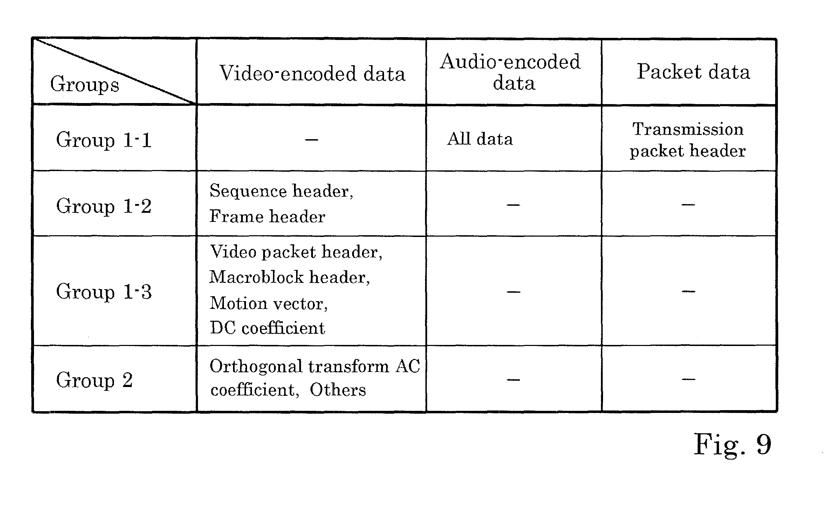

Fig. 9 shows an example of classification table 104 when video data and audio data are treated as media 102, where *n*=3. Since the transmission packet header is the most important, it belongs to sub-group 1-1 of Group 1. In regard to video-encoded data, more important video sequence header and frame header are included in sub-group 1-2 of Group 1, and next more important video packet header, macroblock header, motion vector, and direct current (DC) component of the orthogonal transform coefficients are included in sub-group 1-3. Since the alternating current (AC) component of the orthogonal transform coefficients is not important as compared with those, it belongs to Group 2. Audio-encoded data belongs to Group 1.

Based on the classification table shown in Fig. 9, detection unit 105 detects, for each of transmission packet 101, groups included in that transmission packet 101, and determination unit 106 determines, for each of transmission packets 101, a data portion which includes all data elements which belongs to the upper *m* sub-group of the first group included in that transmitted packet 101, and has the shortest data length, based on the result of the detection, as a data portion for calculating an error detecting code.

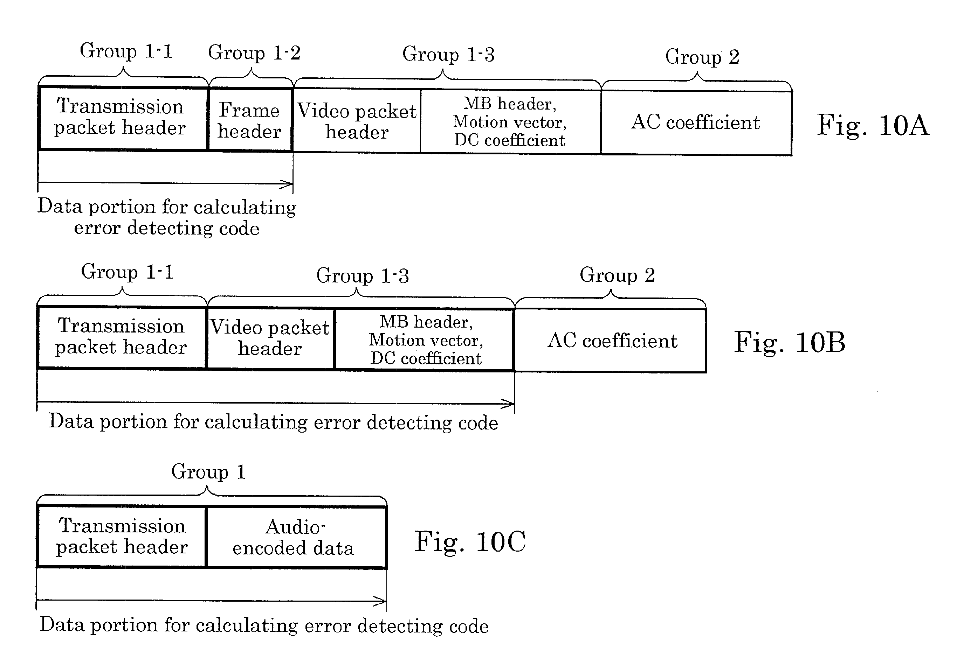

Figs. 10A to 10C each show a data portion for calculating an error detecting code, determined for each packet, where *m*=1. Fig. 10A is an example of a packet which includes all the groups and sub-groups. First, the data portion for calculating the error detecting code includes the transmission packet header belonging to sub-group 1-1, and the header belonging to sub-group 1-2 included in the packet. In the shown example, out of a video sequence header and a frame header, sub-group 1-2 includes the frame header. The video packet header, macroblock header, motion vector, and DC coefficient which belong to sub-group 1-3 are not included in the data portion for calculating the error detecting code because sub-group 1-3 is not included in the upper *m* (=2) sub-groups.

Fig. 10B shows an example which removes the frame header belonging to sub-group 1-2 from the packet shown in Fig. 10A. Unlike the one shown in Fig. 10A, since sub-group 1-3 is included in the upper *m*(=2) sub-groups, the video packet header, macroblock header, motion vector, and DC coefficient belonging to sub-group 1-3 are included in the data portion for calculating the error detecting code.

Fig. 10C shows an example of a packet which stores audio data, where all data elements which make up the packet belong to Group 1, so that the entire packet is subjected to an error detection. The size of the data portion for calculating the error detecting code is equal to the length of the packet.

As is apparent from a comparison of Figs. 10A to 10C with Figs. 4A to 4C, the data portion for calculating the error detecting code in each of the packets in Figs. 10A to 10C is the same as that in the first embodiment. Therefore, the fourth embodiment can also provide similar advantages to the first embodiment.

### Fifth Embodiment:

A media-encoded data transmission apparatus 203 according to a fifth embodiment of the present invention illustrated in Fig. 10 stores data encoded with media 202 in transmitted packet 201 for transmission using a protocol which can store transmitted packet 201 with an error detecting code calculated from part or all of data included in transmitted packet 201 and information for identifying, on the receiver side, a data portion used to calculate the error detecting code. This media-encoded data transmission apparatus 203 comprises classification table 204, mapping table 205, detection unit 206, and determination unit 207.

Classification table 204 is a table for indicating, for each of data elements which can make up transmission packet 201, which of *n* (*n* is a predefined positive integer equal to or larger than two) groups the data element is classified into in accordance with the magnitude of the influence exerted on the reproduction quality on the receiver side by an error associated with the data element, i.e., in accordance with the level of error sensitivity.

Mapping table 205 is a table for indicating the relationship between combinations of groups to which data elements included in transmission packet 201 belong, and selection eligible groups which are groups included in a data portion for calculating an error detecting code.

Detection unit 206 detects, for each of transmission packets 201, groups included in that transmission packet 201 with reference to classification table 204. Determination unit 207 determines, for each of transmission packets 201, a data portion which includes all data elements belonging to selection eligible groups uniquely determined from mapping table 205 by a combination of groups included in that transmitted packet 201, and has the shortest data length, based on the result of the detection by detection unit 206, as a data portion for calculating an error detecting code.

Classification table 204 for use when video data and audio data are treated as media 202, where *n*=4, can be the same as the one shown in Fig. 3 by way of example. Specifically, since the transmission packet header is the most important, it belongs to Group 1. In regard to video-encoded data, the video sequence header and frame header are included in Group 2; the video packet header, macroblock header, motion vector, DC component of the orthogonal transform coefficients are included in Group 3; and the alternating current component of the orthogonal transform coefficients is included in Group 4. Also, all audio-encoded data is included in Group 1.

Detection unit 206 detects, for each of transmission packets 201, groups included in that transmission packet 201 based on the classification table shown in Fig. 3, and determination unit 207 determines a data portion which includes all data elements belonging to selection eligible groups uniquely determined from mapping table 205 from a combination of the groups included in that transmission packet 201, and has the shortest data length, based on the result of the detection, as the data portion for calculating an error detecting code.

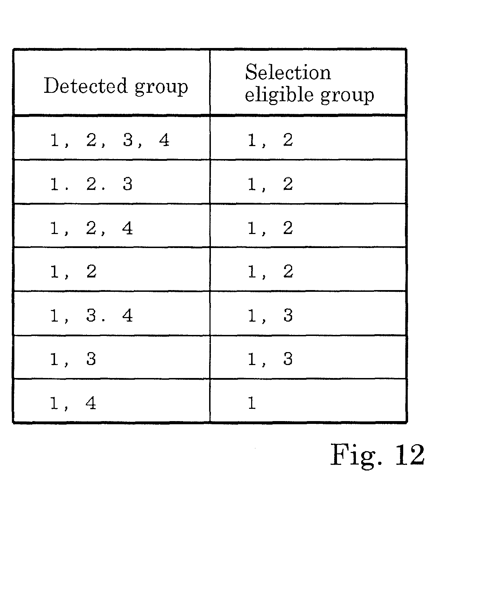

Fig. 12 shows an example of contents of mapping table 205. In this example, when transmission packet 201 includes all of Groups 1, 2, 3, 4, or only Groups 1, 2, 3, or only Groups 1, 2, 4, or only Groups 1, 2, groups which should be included in the data portion for calculating the error detecting code are Groups 1, 2. Also, Fig. 12 shows that when transmitted packet 201 includes only Groups 1, 3, 4, or only Groups 1, 3, groups which should be included in the data portion for calculating the error detecting code are Groups 1, 3. Further, Fig. 12 shows that when transmitted packet 201 includes only Groups 1, 4, a group which should be included in the data portion for calculating the error detecting code is Group 1.

Therefore, with the use of the classification table shown in Fig. 3 and the mapping table shown in Fig. 12, when the packet has the structure as shown in Fig. 4A, the transmission packet header and frame header make up the data portion for calculating the error detecting code, similar to the case described in connection with Fig. 4A. On the other hand, when the packet has the structure as shown in Fig. 4B, the transmission packet header, video packet header, macroblock header, motion vector, and DC coefficient make up the data portion for calculating the error detecting code, similar to the case described in connection with Fig. 4B. Further, when the packet has the structure as shown in Fig. 4C, the entire packet makes up the data portion for calculating the error detecting code, similar to the case described in connection with Fig. 4C. Thus, the fifth embodiment can provide similar advantages to those of the first embodiment.

In the following, a description will be given of specific working Examples of the present invention.

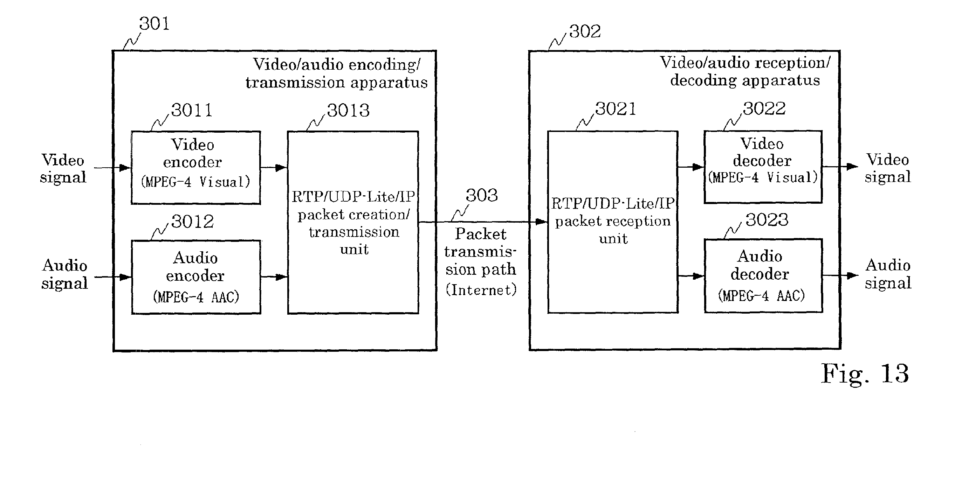

Fig. 13 illustrates a video/audio encoding/transmission system according to Example 1 of the present invention. This encoding/transmission system comprises video/audio encoding/transmission apparatus 301; video/audio reception/decoding apparatus 302; and packet transmission path 303 such as the Internet for interconnecting these encoding/transmission apparatus 301 and reception/decoding apparatus 302. Video/audio encoding/transmission apparatus 301 encodes an applied video signal and audio signal for transmission to video/audio reception/decoding apparatus 302 connected through packet transmission path 303. Video/audio encoding/transmission apparatus 301 used here is based on the media-encoded data transmission apparatus of the aforementioned second embodiment. Video/audio reception/decoding apparatus 302 decodes received encoded data to deliver a video signal and an audio signal.

In this Example, assume that packets are transmitted in accordance with the Internet Protocol (IP). The transmission path includes a radio section in the middle, so that transmitted packets may suffer from bit errors. In this event, no retransmission is performed for an erroneous packet.

Assume that the video signal is encoded using the data partitioning in accordance with the MPEG-4 Visual scheme, while the audio signal is encoded in accordance with MPEG-4 AAC. Therefore, video/audio encoding/transmission apparatus 301 includes video encoder 3011 for encoding the video signal in accordance with the MPEG-4 Visual scheme; audio encoder 3012 for encoding the audio signal in accordance with MPEG-4 AAC; and RTP/UDP-Lite/IP packet creation/transmission unit 3013 for generating a packet based on the video signal encoded by video encoder 3011 and the audio signal encoded by audio encoder 3012. On the other hand, video/audio reception/decoding apparatus 302 comprises RTP/UDP-Lite/IP packet reception unit 3021 for receiving a packet and delivering an encoded video signal and an encoded audio signal; video decoder 3022 for decoding the encoded video signal in accordance with the MPEG-4 Visual scheme; and audio decoder 3023 for decoding the encoded audio signal in accordance with MPEG-4 AAC.

For the transmission of encoded media data, the RTP protocol, UDP-Lite protocol, and IP protocol are used in respective layers. A UDP-Lite packet can store an error detecting code (Checksum) calculated from data from the head to the middle of the packet, and the length of packet data (Checksum Coverage) used for the calculation of the error detecting code.

Video/audio reception/decoding apparatus 302 can detect whether or not a transmission error has occurred in partial data of a received packet, which has a length from the head indicated by Checksum Coverage, by checking the checksum of the received packet. Video/audio reception/decoding apparatus 302, upon detection of a transmission error in a received packet, discards encoded video and audio data included in that packet without decoding, and takes an action to make less conspicuous disturbance of the video/audio signals caused by missing encoded data.

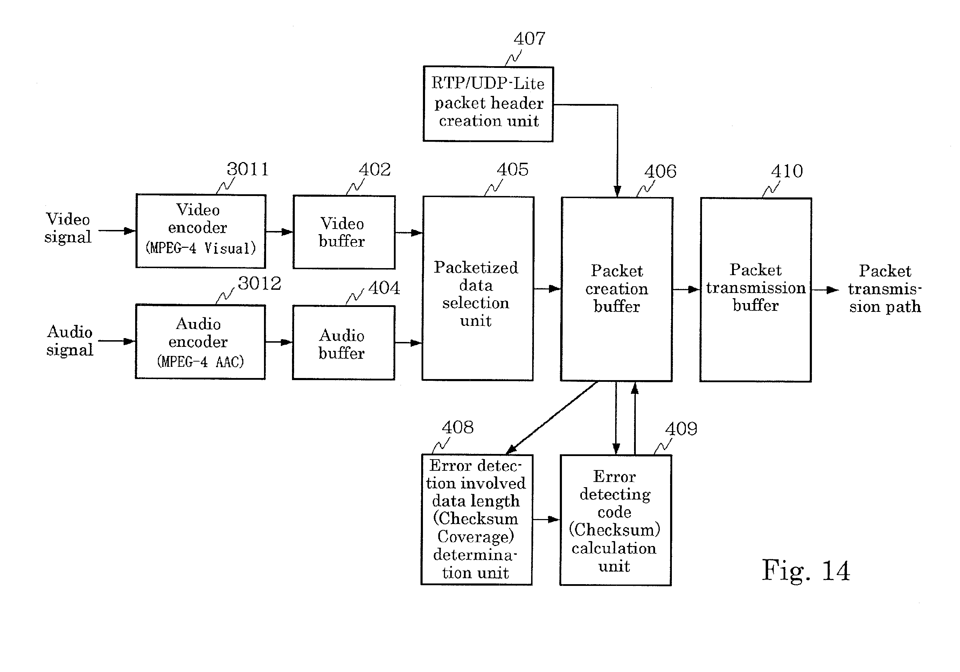

Fig. 14 illustrates a detailed configuration of video/audio encoding/transmission apparatus 301 in Example 1. In Fig. 14, video encoder 3011 encodes an applied video signal in accordance with the MPEG-4 Visual scheme, and delivers the resulting data to video buffer 402. Audio encoder 3012 encodes an applied audio signal in accordance with the MPEG-4 AAC scheme, and delivers the resulting data to audio buffer 404. Packetized data selection unit 405 extracts encoded data to be transmitted from the data stored in video buffer 402 and audio buffer 404, and delivers the same to packet creation buffer 406. Packet header creation unit 407 adds an appropriate RTP header, UDP-Lite header, and IP packet header to the data delivered to packet creation buffer 406. Error-detection involved data length determination unit 408 determines the length of data which should be subjected to an error detection based on the structure of data elements stored in packet creation buffer 406, and delivers the length as the value for the Checksum Coverage field in the UDP-Lite packet header. A method of determining this value will be described later in detail. Error detecting code calculation unit 409 extracts data of the length determined by error-detection involved data length determination unit 408 from buffer 406 to calculate a checksum which is delivered as the value for the Checksum field in the UDP-Lite packet header. With the foregoing operations, the packet data provided in buffer 406 is delivered to packet transmission buffer 410 for transmission to packet transmission path 303.

A description will be given of a method by which error-detection involved data length determination unit 408 determines the length of data which is subjected to an error detection.

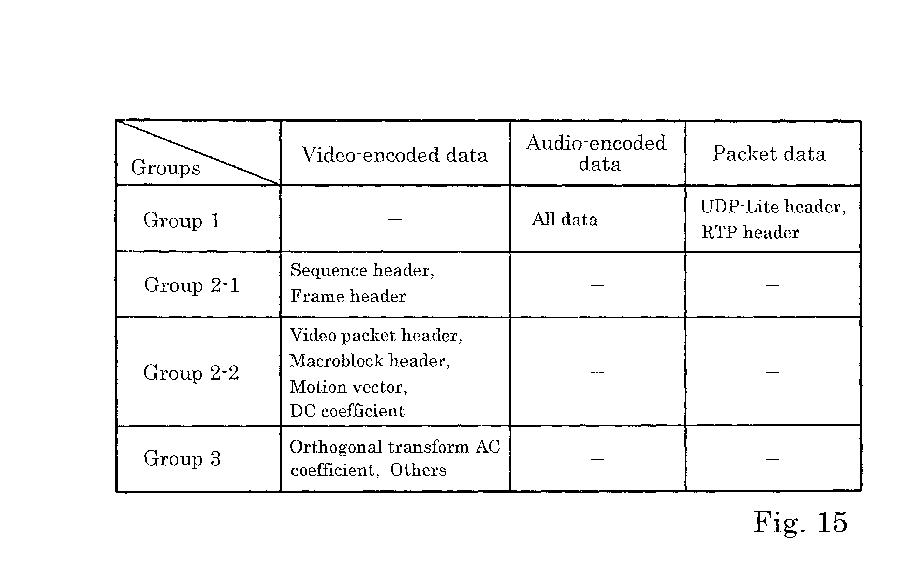

Fig. 15 shows classifications of data elements which make up video-encoded data, audio-encoded data, and transmission packet. Since the UDP-Lite header and RTP header are the most important, they belongs to Group 1. In regard to MPEG-4 video-encoded data, the video sequence header and frame header are included in the first sub-group of Group 2, and the video packet header, macroblock header, motion vector, and direct current (DC) component of the orthogonal transform coefficients are included in the second sub-group of Group 2. The alternating current (AC) component of the orthogonal transform coefficients belongs to Group 3. MPEG-4 audio-encoded data belongs to Group 1. Such a manner of classification has been previously set in a classification table (not shown) which is contained in error-detection involved data length determination unit 408.

Based on the classification shown in Fig. 15, error-detection involved data length determination unit 408 determines the Checksum Coverage value in the UDP-Lite packet such that partial data, which is subjected to the error detection, includes all of data elements belonging to Group 1, and data elements belonging to the relatively highest ranked sub-group of the sub-groups included in the packet, and has the shortest length. In the following, two examples will be shown for more specific operations of error-detection involved data length determination unit 408.

### Exemplary Operation 1:

First, error-detection involved data length determination unit 408 examines whether or not each of groups shown in Fig. 15 is included in a transmission packet stored in packet creation buffer 406.

A specific method for examining this may involve, for example, reading packet data stored in packet creation buffer 406 by error-detection involved data length determination unit 408 itself for determination. In another method, video encoder 401 and audio encoder 403 are allowed to reference the classification table, such that they examine a group to which encoded data belongs, when they generate media-encoded data for delivery to video buffer 402 and audio buffer 404, to store the type of the group to which the data belongs, and the location within the encoded data and the length in video buffer 402 and audio buffer 403, so that packetized data selection unit 405, based on this, transmits information related to the group included in the packet data delivered to packet creation buffer 406 to error-detection involved data length determination unit 408 through buffer 406.

Next, based on the result thus examined, error-detection involved data length determination unit 408 determines the Checksum Coverage value in the UDP-Lite packet such that partial data subjected to the error detection includes all of data elements belonging to Group 1, and data elements belonging to the relatively highest ranked sub-group of the sub-groups included in the packet.

### Exemplary Operation 2:

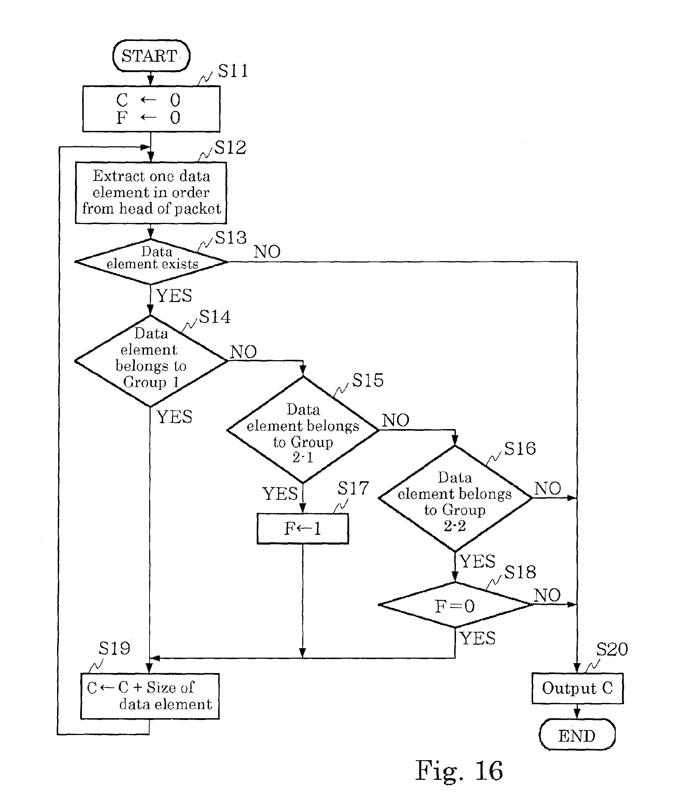

As described in the section of Background Art, when the UDP-Lite protocol is used, encoded data may be rearranged in an order from the one having the highest error sensitivity before packetization, as the data partitioning tool of MPEG-4, to effectively increase the error immunity. When packet data is arranged in packet creation buffer 406 in an order from the one having the highest error sensitivity, the Checksum Coverage value can be determined by utilizing this without examining all groups included in the packet data. Fig. 16 illustrates an example of the processing by error-detection involved data length determination unit 408 in this case.

Error-detection involved data length determination unit 408 executes the processing illustrated in Fig. 16 for each transmission packet created in packet creation buffer 406. First, at step S11, internal variables *C* and *F* are initialized to zero. Internal variable *C* is a variable in which the Checksum Coverage value is finally placed. Internal variable *F* is a variable for managing whether or not a data element belonging to sub-group 2-1 has been included in the transmission packet.

Next, at step S12, one data element is extracted in order from the head of the packet, and it is confirmed at step S13 whether there is a data element, and then at steps S14 to S16, it is determined to which group the data element extracted this time belongs with reference to an internal classification table which describes the classification shown in Fig. 15. When YES at step S14, i.e., when the data element belongs to Group 1, the size of the data element extracted this time is added to internal variable C at step S19. Then, the processing returns to step S12 to extract the next data element, and the foregoing processing is repeated. When YES at step S15, i.e., when the data element belongs to group 2-1, internal variable *F* is set to one at step S17 to memorize that a data element belonging to group 2-1 was included in the transmission packet. At step S19, the size of the data element extracted this time is added to internal variable C, and the processing returns to step S12. When YES at step S16, i.e., when the data element belongs to group 2-2, it is determined at step S18 whether or not internal variable *F* is zero. When internal variable F is zero, i.e., when group 2-1 is not included in the transmission packet, the size of the data element extracted this time is added to internal variable C at step S19, and the processing returns to step S12.

The transmitted packet created in packet creation buffer 406 is packetized with encoded data arranged in the order from the one having the highest error sensitivity, so that when a data element extracted at step S12 is a data element belonging to group 2-2 with internal variable F being set to one, i.e., when NO at step S18, and when a data element extracted at step S12 is a data element belonging to Group 3, i.e., when NO at step S16, and when the last data has been extracted, i.e., when NO at step S13, the value of internal variable C will no longer be changed at that time onward. Therefore, at step S20, the value held in internal variable C is delivered as the Checksum Coverage value.

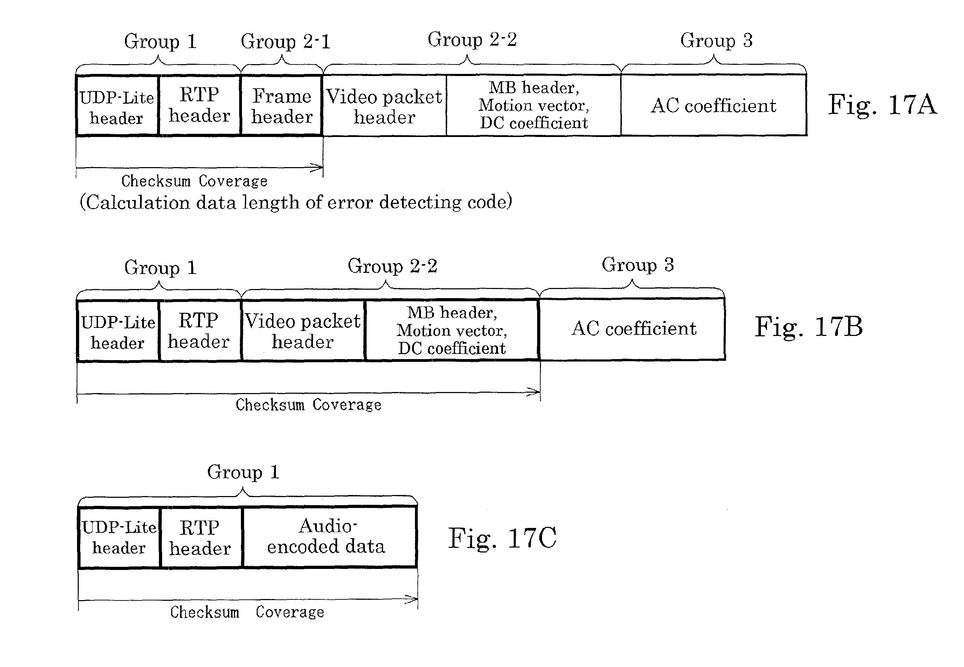

Figs. 17A to 17C each show exemplary data elements which make up a transmission packet, and a determined Checksum Coverage value. Fig. 17A shows an example of a packet which includes all the groups and sub-groups. First, checksum calculation data includes the UDP-Lite header and RTP header belonging to Group 1, and the header belonging to the highest ranked sub-group 2-1 of sub-group 2-1 and sub-group 2-2 included in the packet. In the shown example, as the header belonging to sub-group 2-1, out of the video sequence header and frame header, the frame header is included. The video packet header, macroblock header, motion vector, and DC coefficient belonging to sub-group 2-2 are not selected for data subjected to the checksum calculation because data elements belonging to sub-group 2-1 are included in the packet. The AC coefficient belonging to Group 3 is not selected for data subjected to the checksum calculation.

Fig. 17B shows an example which removes the header belonging to sub-group 2-1 from the packet shown in Fig. 17A. Unlike the one shown in Fig. 16A, since sub-group 2-1 does not exist in the packet, the video packet header, macroblock header, motion vector, and DC coefficient belonging to sub-group 2-2 are selected for data subjected to the checksum calculation.

Fig. 17C shows an example of a UDP-Lite packet which stores MPEG-4 audio data. Since all data elements composing the packet belong to Group 1, the entire packet is subjected to the error detection. The Checksum Coverage value is equal to the UDP-Lite packet length.

Consider a situation in which a transmission error occurs on a transmission path during a transmission of the three types of packets illustrated in Figs. 17A to 17C in Example 1, so that the video/audio reception/decoding apparatus fails to receive correct packet data.

If a transmission error occurs in a data element of Group 1 or Group 2-1 during a transmission of the packet shown in Fig. 17A, this error is detected by the checksum, so that the received packet is discarded, and the processing is performed for making the error less conspicuous. In this event, the transmitted packet includes the error in the highly error sensitive UDP-Lite header and RTP header, or video sequence header, or frame header. When such a packet is to be decoded, the packet cannot at all be decoded, or a significantly disturbed video/audio signal is generated, but such events can be prevented by using the transmission apparatus according to this Example.

If no transmission error occurs in data elements in Group 1 and Group 2-1 but an error occurs in a data element in Group 2-2 during a transmission of the packet shown in Fig. 17A, the received packet is decoded without detecting the error. In this event, since the received packet includes the error in one or a plurality of the highly error sensitive video packet header, macroblock header, motion vector, and DC coefficient, a reproduced video/audio signal suffers from disturbance. Nevertheless, if this received packet were discarded, the video sequence header and frame header belonging to Group 2-1, which are more important than Group 2-2, would also be discarded. This influence could be exerted not only on the currently received packet but also on subsequently received packets, resulting in significant disturbance continuing for a while. In this Example, it is understood that while large disturbance occurs in reproduced data, the disturbance is localized.

If transmission errors do not occur in respective data elements in Group 1, Group 2-1, or Group 2-2, but an error occurs in data elements of Group 3 during a transmission of the packet shown in Fig. 17A, the received packet is decoded without detecting this error. In this event, the received packet includes the error only in the lowly error sensitive AC coefficient, but does not include any error in higher error sensitive portions. In this event, while a decoded image is disturbed due to the influence of the erroneous AC coefficient, the disturbance is relatively small. The immunity to transmission errors is high in comparison with the case where errors are detected in the entire packets to discard the video sequence header and frame header, resulting in significant disturbance in a reproduced image.

If a transmission error occurs in a data element in Group 1 or Group 2-2 during a transmission of the packet shown in Fig. 17B, this error is detected by the checksum, so that the received packet is discarded, and the processing is performed to make the error less conspicuous. In this event, the received packet includes the error in one or a plurality of the highly error sensitive video packet header, macroblock header, motion vector, and DC coefficient, so that if this data is decoded, a reproduced video/audio signal suffers from significant disturbance. In this Example, however, such an event will not occur.

If no transmission error occurs in the data elements in Group 1 and Group 2-2 but an error occurs in the data element in Group 3 during a transmission of the packet shown in Fig. 17B, the received packet is decoded without detecting this error. In this event, the received packet includes the error only in the lowly error sensitive AC coefficient, but includes no error in more highly error sensitive portions. In this event, while a decoded image suffers from disturbance due to the influence of the erroneous AC coefficient, the disturbance is relatively small, so that a decoded image can be produced using the correctly transmitted video packet header, macroblock header, motion vector, and DC coefficient to make the error less conspicuous.

If an error occurs during a transmission of the packet shown in Fig. 17C, this error is detected, so that the received packet is discarded, and compensation processing is performed to maximally reduce the influence. In this way, it is possible to prevent an extraneous sound produced by decoding the erroneous audio-encoded data.

As described above, in Example 1, the video sequence header and frame header, which affect the decoding of not only one but a plurality of video packet data, are not discarded due to a transmission error in the rest of video-encoded data. In addition, the error correcting code for the highly error sensitive video packet header, macroblock header, motion vector, DC coefficient and the like within the remaining video-encoded data is added, only when the video sequence header and frame header are not included, to prevent these data elements from erroneously being decoded, and to prevent all video-encoded data from being discarded due to a transmission error in the remaining lowly error sensitive data elements. As a result of the foregoing, it is possible to add an error detecting code suitable for the structure of individual transmitted packet data and increase the immunity to the transmission error.

While the video/audio encoding/transmission system in Example 1 has been described on the premise that the media-encoded data transmission apparatus of the second embodiment is applied, a video/audio encoding/transmission system can be configured in a similar manner based on the first embodiment, third embodiment, and fourth embodiment. In this event, the operation of error-detection involved data length determination unit 408 and a used classification table in the aforementioned Example 1 are replaced with those as described in the first, third, and fourth embodiments, respectively, and the rest is the same as Example 1.

### Example 2:

Next, a description will be given of a video/audio encoding/transmission system in Example 2 of the present invention. While the video/audio encoding/transmission system in Example 2 is similar to the video/audio encoding/transmission system in Example 1 illustrated in Figs. 13 to 14, the former differs from the latter in the processing in error-detection involved data length determination unit 408. Assume that the data elements which make up video-encoded data, audio encoding, and packet are classified as shown in Fig. 15, as is the case with Example 1.

In Example 2, error-detection involved data length determination unit 408 first classifies data elements included in packet data based on the table shown in Fig. 15, and determines whether or not the packet data includes data elements in each of four groups, i.e., Group 1, Group 2-1, Group 2-2, and Group 3.

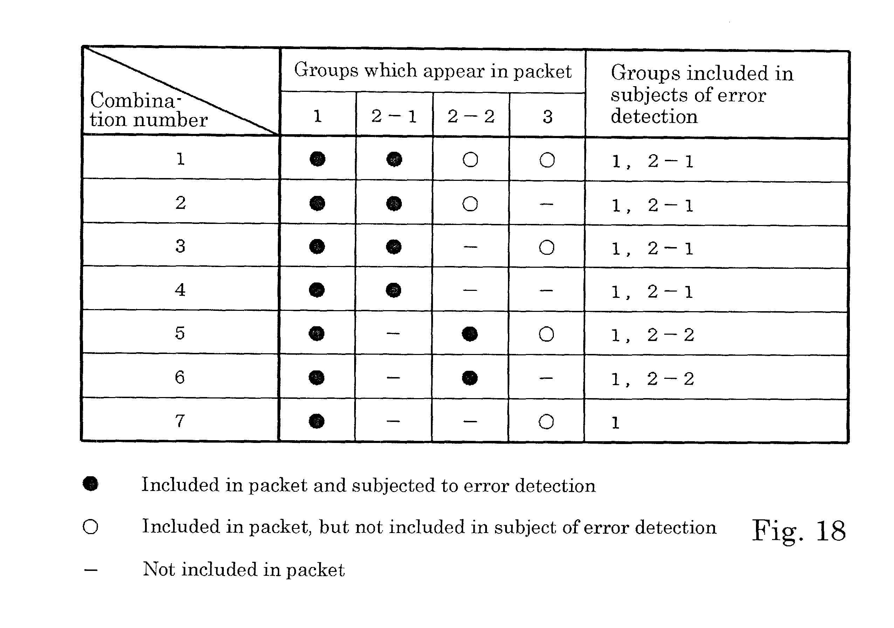

From the fact that the packet data includes Group 1, to which the UDP-Lite header belongs, without fail, and includes audio- or video-encoded data, the results of this determination are limited to a total of seven types. Each rows in Fig. 18 shows a combination of these seven types, where a filled circle symbol "•" or an open circle symbol "○" indicates that each group is included, while a symbol "-" indicates that an associated group is not included. For example, Combination 1 shows a packet which includes all the groups; and Combination 5 shows a packet which includes data elements in Group 1, Group 2-2, and Group 3 but does not include data elements in Group 2-1.

Next, error-detection involved data length determination unit 408 determines which group of data elements are included in data subjected to an error detection.

In Fig. 18, the distinction of the filled circle symbol and open circle symbol indicates whether or not an associated group is included in data subjected to an error detection without fail. A group indicated by the filled circle symbol is subjected to the error detection, while a group indicated by the open circle symbol is not necessarily included in data subjected to the error detection. For example, in Combination 1 in Fig. 18, from data elements included in packet data, data elements in Group 1 and Group 2 are included in data subjected to the error detection, while data elements in Group 2-2 and Group 3 are not included in the data subjected to the error detection. In Combination 5, data elements in Group 1 and Group 2-2 are included in data subjected to the error detection, while data elements in Group 3 are not included in the data subjected to the error detection. In other words, the table in Fig. 18 corresponds to the mapping table described in the fifth embodiment.

Error-detection involved data length determination unit 408 determines a Checksum Coverage value such that partial data subjected to the error detection includes all data elements belonging to those groups indicated by the filled circle symbols in Fig. 18 and has the shortest length.

The foregoing has shown a procedure of determining the length of data subjected to the error detection in Example 2.

While the operation of error detected data determination unit 408 in Example 2 is different from the operation of error-detection involved data length determination unit 408 in Example 1, similar functions to those in Example 1 are accomplished as a result. For this reason, the aforementioned Figs. 17A to 17C also show examples of UDP-Lite packets created by Example 2. Also, the advantages provided by Example 2 are similar to the advantages provided by Example 1.

In this way, Example 2 can generate a video/audio reproduced signal with relatively small disturbance when an error occurs only in lowly error sensitive data elements, while keeping low the probability of discarding the video sequence header and frame header which affect the decoding of a plurality of video packet data, and suppressing as much as possible significant disturbance in the video/audio reproduction quality caused by a transmission error in highly error sensitive data elements.

While the foregoing description has been given of embodiments and Examples of the present invention, the present invention is not limited only to the foregoing embodiments or Examples, but a variety of other modifications can be added thereto. Also, the media-encoded data transmission apparatus of the present invention can be implemented by a computer and a program, not to mention a hardware-based implementation, The program is provided in a computer readable recording medium such as a magnetic disk, a semiconductor memory or the like having the program recorded thereon, and is read by a computer, when the computer is started, to control the operation of the computer, thereby forcing the computer to function the detection unit and determination unit in each embodiment described above, or to function as the error-detection involved data length determination unit, video encoder, audio encoder, packetized data selection unit, RTP/UDP-Lite packet header creation unit, and error detecting code calculation unit in each Example described above.

## Claims

1. A media-encoded data transmission method for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said method comprising the steps of:
previously classifying each of data elements capable of composing a transmission packet into *n* (*n* is a predefined positive integer equal to or larger than two) groups in accordance with magnitude of influence exerted on reproduction quality on the receiver side by an error associated with the data element; and
upon creation of each transmission packet for transmission, determining, for each transmission packet, a data portion which includes all data elements that belong to largely affecting groups in accordance with a predetermined criterion and has the shortest data length, as a data portion for calculating the error detecting code.

2. A media-encoded data transmission method for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said method comprising the steps of:
previously classifying each of data elements capable of composing a transmission packet into *n* (*n* is a predefined positive integer equal to or larger than two) groups in accordance with magnitude of influence exerted on reproduction quality on the receiver side by an error associated with the data element; and
upon creation of each transmission packet for transmission, detecting, for each transmission packet, a combination of groups to which data elements included in the transmission packet belong to determine a data portion which includes all data elements that belong to selection eligible groups uniquely determined by the detected combination of groups, and has the shortest data length, as a data portion for calculating the error detecting code.

3. A media-encoded data transmission method for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said method comprising the steps of:
previously classifying each of data elements capable of composing a transmission packet into *n* (*n* is a predefined positive integer equal to or larger than two) groups ordered from one having the highest error sensitivity in accordance with the level of an error sensitivity indicative of magnitude of influence exerted on reproduction quality on the receiver side by an error associated with the data element; and
upon creation of each transmission packet for transmission, determining, for each transmission packet, a data portion which includes all data elements belonging to upper *m* (*m* is a predefined positive integer equal to or larger than one and equal to or smaller than *n*-1) of groups included in the transmission packet, and has the shortest data length, as a data portion for calculating the error detecting code.

4. A media-encoded data transmission method for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said method comprising the steps of:
previously classifying each of data elements capable of composing a transmission packet into the highest ranked first group, the second highest ranked second group, and the lowest ranked third group in accordance with the level of an error sensitivity indicative of magnitude of influence exerted on reproduction quality on the receiver side by an error associated with the data element, and classifying data elements included in the second group into *n* (*n* is a predefined positive integer equal to or larger than two) sub-groups ordered from one having the highest error sensitivity; and
upon creation of each transmission packet for transmission, determining, for each transmission packet, a data portion which includes all data elements belonging to the first group included in the transmission packet, and data elements belonging to upper *m* (*m* is a predefined positive integer equal to or larger than one and equal to or smaller than *n*-1) sub-groups of the second group included in the transmission packet, and has the shortest data length, as a data portion for calculating the error detecting code.

5. A media-encoded data transmission method for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said method comprising the steps of:
previously classifying each of data elements capable of composing a transmission packet into a highly ranked first group and a lowly ranked second group in accordance with the level of an error sensitivity indicative of magnitude of influence exerted on reproduction quality on the receiver side by an error associated with the data element, and classifying data elements included in the second group into *n* (*n* is a predefined positive integer equal to or larger than two) sub-groups ordered from one having the highest error sensitivity; and
upon creation of each transmission packet for transmission, determining, for each transmission packet, a data portion which includes all data elements belonging to the first group included in the transmission packet, and data elements belonging to upper *m* (*m* is a predefined positive integer equal to or larger than one and equal to or smaller than *n*-1) sub-groups of the second group included in the transmission packet, and has the shortest data length, as a data portion for calculating the error detecting code.

6. A media-encoded data transmission method for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said method comprising the steps of:
previously classifying each of data elements capable of composing a transmission packet into a highly ranked first group and a lowly ranked second group in accordance with the level of an error sensitivity indicative of magnitude of influence exerted on reproduction quality on the receiver side by an error associated with the data element, and classifying data elements included in the first group into *n (n* is a predefined positive integer equal to or larger than two) sub-groups ordered from one having the highest error sensitivity; and
upon creation of each transmission packet for transmission, determining, for each transmission packet, a data portion which includes all data elements belonging to upper *m* (*m* is a predefined positive integer equal to or larger than one and equal to or smaller than *n*-1) sub-groups of the first group included in the transmission packet, and has the shortest data length, as a data portion for calculating the error detecting code.

7. A media-encoded data transmission method for transmitting data, in which at least video media is encoded, stored in a transmitted packet using a protocol which can store the transmitted packet with an error detecting code calculated from part or all of data included in the transmitted packet, and with information for identifying, on a receiver side, a data portion used in the calculation of the error detecting code, said method comprising the steps of:
upon creating each transmission packet for transmission,
(a) determining a data portion for calculating the error detecting code such that the data portion for calculating the error detecting code includes a transmission packet header, a video sequence header, and a frame header when the transmission packet includes the video sequence header which is a header for storing information on an entire video sequence, or the frame header which is a header for storing information on an overall frame; and
(b) determining the data portion for calculating the error detecting code such that the data portion for calculating the error detecting code includes the transmission packet header, and important data elements within video-encoded data included in the transmission packet, and has the shortest data length, when the transmission packet includes neither the video sequence header or the frame header.

8. A media-encoded data transmission method for transmitting data, in which at least video media is encoded, stored in a transmitted packet using a protocol which can store the transmitted packet with an error detecting code calculated from part or all of data included in the transmitted packet, and with information for identifying, on a receiver side, a data portion used in the calculation of the error detecting code, said method comprising the steps of:
upon creating each transmission packet for transmission,
(a) determining a data portion for calculating the error detecting code such that the data portion for calculating the error detecting code includes a transmission packet header, a video sequence header, and a frame header, and has the shortest data length when the transmission packet includes the video sequence header which is a header for storing information on an entire video sequence, or the frame header which is a header for storing information on an overall frame;
(b) determining the data portion for calculating the error detecting code such that the data portion for calculating the error detecting code includes the transmission packet header, and important data elements within video-encoded data included in the transmission packet, and has the shortest data length, when the transmission packet includes neither the video sequence header or the frame header; and
(c) determining the data portion for calculating the error detecting code such that the data portion for calculating the error detecting code includes all encoded data when the transmission packet includes neither the video sequence header or the frame header, and does not include important data elements within the video-encoded data.

9. The media-encoded data transmission method according to claim 7, wherein data elements of the media-encoded data other than video are always included in the data for calculating the error detecting code.

10. The media-encoded data transmission method according to claim 8, wherein data elements of the media-encoded data other than video are always included in the data for calculating the error detecting code.

11. The media-encoded data transmission method according to claim 7, wherein the important data elements within the video-encoded data comprise a header related to an entire video packet, a header related to an entire macroblock, information required to create a motion compensated image, and a direct current component of orthogonal transform coefficients.

12. The media-encoded data transmission method according to claim 8, wherein the important data elements within the video-encoded data comprise a header related to an entire video packet, a header related to an entire macroblock, information required to create a motion compensated image, and a direct current component of orthogonal transform coefficients.

13. The media-encoded data transmission method according to claim 1, wherein said protocol is UDP-Lite.

14. The media-encoded data transmission method according to claim 7, wherein said protocol is UDP-Lite.

15. The media-encoded data transmission method according to claim 8, wherein said protocol is UDP-Lite.

16. A media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said apparatus comprising:
a classification table for indicating which of *n* (*n* is a predefined positive integer equal to or larger than two) groups each of data elements capable of composing a transmission packet belongs to in accordance with magnitude of influence exerted on reproduction quality on the receiver side by an error associated with the data element;
detecting means for detecting, for each of the transmission packets, groups included in the transmission packet with reference to said classification table; and
determining means for determining, for each transmission packet, a data portion which includes all data elements that belong to largely affecting groups in accordance with a predetermined criterion and has the shortest data length, based on result of the detection by said detecting means, as a data portion for calculating the error detecting code.

17. A media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said apparatus comprising:
a classification table for indicating which of *n* (*n* is a predefined positive integer equal to or larger than two) groups each of data elements capable of composing a transmission packet belongs to in accordance with magnitude of influence exerted on reproduction quality on the receiver side by an error associated with the data element;
a mapping table for indicating a relationship between a combination of groups to which data elements included in the transmission packet belong and selection eligible groups;
detecting means for detecting, for each of the transmission packets, groups included in the transmission packet with reference to said classification table; and
determining means for determining, for each transmission packet, a data portion which includes all data elements that belong to the selection eligible groups uniquely determined from said mapping table by a combination of groups included in the transmission packet, and has the shortest data length, based on result of the detection by said detecting means, as a data portion for calculating the error detecting code.

18. A media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said apparatus comprising:
a classification table for indicating which of *n* (*n* is a predefined positive integer equal to or larger than two) groups ordered from one having the highest error sensitivity, each of data elements capable of composing a transmission packet belongs to in accordance with the level of an error sensitivity indicative of magnitude of influence exerted on reproduction quality on the receiver side by an error associated with the data element;
detecting means for detecting, for each of the transmission packets, groups included in the transmission packet with reference to said classification table; and
determining means for determining, for each transmission packet, a data portion which includes all data elements belonging to upper *m* (*m* is a predefined positive integer equal to or larger than one and equal to or smaller than *n*-1) of groups included in the transmission packet, and has the shortest data length, based on result of the detection by said detecting means, as a data portion for calculating the error detecting code.

19. A media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said apparatus comprising:
a classification table for indicating which of the highest ranked first group, the second highest ranked second group, and the lowest ranked third group, each of data elements capable of composing a transmission packet are classified into, and which of *n* (*n* is a predefined positive integer equal to or larger than two) sub-groups ordered from one having the highest error sensitivity, each of data elements classified into the second group is classified into, in accordance with the level of an error sensitivity indicative of magnitude of influence exerted on reproduction quality on the receiver side by an error associated with the data element;
detecting means for detecting, for each of the transmission packets, groups included in the transmission packet with reference to said classification table; and
determining means for determining, for each transmission packet, a data portion which includes all data elements belonging to the first group included in the transmission packet, and data elements belonging to upper *m* (*m* is a predefined positive integer equal to or larger than one and equal to or smaller than *n*-1) sub-groups of the second group included in the transmission packet, and has the shortest data length, based on result of the detection by said detecting means, as a data portion for calculating the error detecting code.

20. A media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said apparatus comprising:
a classification table for indicating which of a highly ranked first group and a lowly ranked second group, each of data elements capable of composing a transmission packet are classified into, and which of *n* (*n* is a predefined positive integer equal to or larger than two) sub-groups ordered from one having the highest error sensitivity, each of data elements classified into the second group is classified into, in accordance with the level of an error sensitivity indicative of magnitude of influence exerted on reproduction quality on the receiver side by an error associated with the data element;
detecting means for detecting, for each of the transmission packets, groups included in the transmission packet with reference to said classification table; and
determining means for determining, for each transmission packet, a data portion which includes all data elements belonging to the first group included in the transmission packet, and data elements belonging to upper *m* (*m* is a predefined positive integer equal to or larger than one and equal to or smaller than *n*-1) sub-groups of the second group included in the transmission packet, and has the shortest data length, based on result of the detection by said detecting means, as a data portion for calculating the error detecting code.

21. A media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code, said apparatus comprising:
a classification table for indicating which of a highly ranked first group and a lowly ranked second group, each of data elements capable of composing a transmission packet are classified into, and which of *n* (*n* is a predefined positive integer equal to or larger than two) sub-groups ordered from one having the highest error sensitivity, each of data elements classified into the first group is classified into, in accordance with the level of an error sensitivity indicative of magnitude of influence exerted on reproduction quality on the receiver side by an error associated with the data element;
detecting means for detecting, for each of the transmission packets, groups included in the transmission packet with reference to said classification table; and
determining means for determining, for each transmission packet, a data portion which includes all data elements belonging to upper *m* (*m* is a predefined positive integer equal to or larger than one and equal to or smaller than *n*-1) sub-groups of the first group included in the transmission packet, and has the shortest data length, based on result of the detection by said detecting means, as a data portion for calculating the error detecting code.

22. A media-encoded data transmission apparatus for transmitting data, in which at least video media is encoded, stored in a transmitted packet using a protocol which can store the transmitted packet with an error detecting code calculated from part or all of data included in the transmitted packet, and with information for identifying, on a receiver side, a data portion used in the calculation of the error detecting code, said apparatus comprising:
transmitting means for transmitting a transmitted packet; and
error-detection involved data length determining means, operative when each transmission packet is created for transmission, to determine a data portion for calculating the error detecting code such that the data portion for calculating the error detecting code includes a transmission packet header, a video sequence header, and a frame header, and has the shortest data length, when the transmission packet includes the video sequence header which is a header for storing information on an entire video sequence, or the frame header which is a header for storing information on an overall frame, and such that the data portion for calculating the error detecting code includes the transmission packet header, and important data element within video-encoded data included in the transmission packet, and has the shortest data length, when the transmission packet includes neither the video sequence header or the frame header.

23. A media-encoded data transmission apparatus for transmitting data, in which at least video media is encoded, stored in a transmitted packet using a protocol which can store the transmitted packet with an error detecting code calculated from part or all of data included in the transmitted packet, and with information for identifying, on a receiver side, a data portion used in the calculation of the error detecting code, said apparatus comprising:
transmitting means for transmitting a transmitted packet; and
error-detection involved data length determining means, operative when each transmission packet is created for transmission, to determine a data portion for calculating the error detecting code such that the data portion for calculating the error detecting code includes a transmission packet header, a video sequence header, and a frame header, and has the shortest data length when the transmission packet includes the video sequence header which is a header for storing information on an entire video sequence, or the frame header which is a header for storing information on an overall frame, such that the data portion for calculating the error detecting code includes the transmission packet header, and important data element within video-encoded data included in the transmission packet, and has the shortest data length, when the transmission packet includes neither the video sequence header or the frame header, and such that the data portion for calculating the error detecting code includes all encoded data when the transmission packet includes neither the video sequence header or the frame header, and does not include important data elements within the video-encoded data.

24. The media-encoded data transmission apparatus according to claim 22, wherein said error-detection involved data length determining means always includes data elements of the media-encoded data except for video in the data for calculating the error detecting code.

25. The media-encoded data transmission apparatus according to claim 23, wherein said error-detection involved data length determining means always includes data elements of the media-encoded data except for video in the data for calculating the error detecting code.

26. The media-encoded data transmission apparatus according to claim 22, wherein the important data elements within the video-encoded data comprise a header related to an entire video packet, a header related to an entire macroblock, information required to create a motion compensated image, and a direct current component of orthogonal transform coefficients.

27. The media-encoded data transmission apparatus according to claim 23, wherein the important data elements within the video-encoded data comprise a header related to an entire video packet, a header related to an entire macroblock, information required to create a motion compensated image, and a direct current component of orthogonal transform coefficients.

28. The media-encoded data transmission apparatus according to claim 16, wherein said protocol is UDP-Lite.

29. The media-encoded data transmission apparatus according to claim 22, wherein said protocol is UDP-Lite.

30. The media-encoded data transmission apparatus according to claim 23, wherein said protocol is UDP-Lite.

31. A program for causing a computer which constitutes a media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code to function as:
detecting means for detecting, for each of the transmission packets, groups included in the transmission packet with reference to a classification table which indicates which of *n* (*n* is a predefined positive integer equal to or larger than two) groups each of data elements capable of composing a transmission packet belongs to in accordance with magnitude of influence exerted on reproduction quality on the receiver side by an error associated with the data element; and
determining means for determining, for each transmission packet, a data portion which includes all data elements that belong to largely affecting groups in accordance with a predetermined criterion and has the shortest data length, based on result of the detection by said detecting means, as a data portion for calculating the error detecting code.

32. A program for causing a computer which constitutes a media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code to function as:
detecting means for detecting, for each of the transmission packets, groups included in the transmission packet with reference to a classification table which indicates which of *n* (*n* is a predefined positive integer equal to or larger than two) groups each of data elements capable of composing a transmission packet belongs to in accordance with magnitude of influence exerted on reproduction quality on the receiver side by an error associated with the data element; and
determining means for determining, for each transmission packet, a data portion which includes all data elements that belong to selection eligible groups uniquely determined from a mapping table, which indicates a relationship between a combination of groups to which the data elements included in the transmission packet belong and selection eligible groups, by a combination of groups included in the transmission packet, and has the shortest data length, based on result of the detection by said detecting means, as a data portion for calculating the error detecting code.

33. A program for causing a computer which constitutes a media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code to function as:
detecting means for detecting, for each of the transmission packets, groups included in the transmission packet with reference to a classification table which indicates which of *n* (*n* is a predefined positive integer equal to or larger than two) groups ordered from one having the highest error sensitivity, each of data elements capable of composing a transmission packet belongs to in accordance with the level of an error sensitivity indicative of magnitude of influence exerted on reproduction quality on the receiver side by an error associated with the data element; and
determining means for determining, for each transmission packet, a data portion which includes all data elements belonging to upper *m* (*m* is a predefined positive integer equal to or larger than one and equal to or smaller than *n*-1) of groups included in the transmission packet, and has the shortest data length, based on result of the detection by said detecting means, as a data portion for calculating the error detecting code.

34. A program for causing a computer which constitutes a media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code to function as:
detecting means for detecting, for each of the transmission packets, groups included in the transmission packet with reference to a classification table which indicates which of the highest ranked first group, the second highest ranked second group, and the lowest ranked third group, each of data elements capable of composing a transmission packet are classified into, and which of *n* (*n* is a predefined positive integer equal to or larger than two) sub-groups ordered from one having the highest error sensitivity, each of data elements classified into the second group is classified into, in accordance with the level of an error sensitivity indicative of magnitude of influence exerted on reproduction quality on the receiver side by an error associated with the data element;
determining means for determining, for each transmission packet, a data portion which includes all data elements belonging to the first group included in the transmission packet, and data elements belonging to upper *m* (*m* is a predefined positive integer equal to or larger than one and equal to or smaller than *n*-1) sub-groups of the second group included in the transmission packet, and has the shortest data length, based on result of the detection by said detecting means, as a data portion for calculating the error detecting code.

35. A program for causing a computer which constitutes a media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code to function as:
detecting means for detecting, for each of the transmission packets, groups included in the transmission packet with reference to a classification table which indicates which of a highly ranked first group and a lowly ranked second group, each of data elements capable of composing a transmission packet are classified into, and which of *n* (*n* is a predefined positive integer equal to or larger than two) sub-groups ordered from one having the highest error sensitivity, each of data elements classified into the second group is classified into, in accordance with the level of an error sensitivity indicative of magnitude of influence exerted on reproduction quality on the receiver side by an error associated with the data element; and
determining means for determining, for each transmission packet, a data portion which includes all data elements belonging to the first group included in the transmission packet, and data elements belonging to upper *m* (*m* is a predefined positive integer equal to or larger than one and equal to or smaller than *n*-1) sub-groups of the second group included in the transmission packet, and has the shortest data length, based on result of the detection by said detecting means, as a data portion for calculating the error detecting code.

36. A program for causing a computer which constitutes a media-encoded data transmission apparatus for transmitting media-encoded data stored in a transmitted packet using a protocol which can store the transmitted packet with an error detecting code calculated from part or all of data included in the transmitted packet, and with information for identifying, on a receiver side, a data portion used in the calculation of the error detecting code to function as:
detecting means for detecting, for each of the transmission packets, groups included in the transmission packet with reference to a classification table which indicates which of a highly ranked first group and a lowly ranked second group, each of data elements capable of composing a transmission packet are classified into, and which of *n* (*n* is a predefined positive integer equal to or larger than two) sub-groups ordered from one having the highest error sensitivity, each of data elements classified into the first group is classified into, in accordance with the level of an error sensitivity indicative of magnitude of influence exerted on reproduction quality on the receiver side by an error associated with the data element; and
determining means for determining, for each transmission packet, a data portion which includes all data elements belonging to upper *m* (*m* is a predefined positive integer equal to or larger than one and equal to or smaller than *n*-1) sub-groups of the first group included in the transmission packet, and has the shortest data length, based on result of the detection by said detecting means, as a data portion for calculating the error detecting code.

37. A program for causing a computer which constitutes a media-encoded data transmission apparatus for transmitting data, in which at least video media is encoded, stored in a transmitted packet using a protocol which can store the transmitted packet with an error detecting code calculated from part or all of data included in the transmitted packet, and with information for identifying, on a receiver side, a data portion used in the calculation of the error detecting code to function as:
error-detection involved data length determining means, operative when each transmission packet is created for transmission, to determine a data portion for calculating the error detecting code such that the data portion for calculating the error detecting code includes a transmission packet header, a video sequence header, and a frame header, and has the shortest data length, when the transmission packet includes the video sequence header which is a header for storing information on an entire video sequence, or the frame header which is a header for storing information on an overall frame, and such that the data portion for calculating the error detecting code includes the transmission packet header, and important data element within video-encoded data included in the transmission packet, and has the shortest data length, when the transmission packet includes neither the video sequence header or the frame header.

38. A program for causing a computer which constitutes a media-encoded data transmission apparatus for transmitting data, in which at least video media is encoded, stored in a transmitted packet using a protocol which can store the transmitted packet with an error detecting code calculated from part or all of data included in the transmitted packet, and with information for identifying, on a receiver side, a data portion used in the calculation of the error detecting code to function as:
error-detection involved data length determining means, operative when each transmission packet is created for transmission, to determine a data portion for calculating the error detecting code such that the data portion for calculating the error detecting code includes a transmission packet header, a video sequence header, and a frame header, and has the shortest data length when the transmission packet includes the video sequence header which is a header for storing information on an entire video sequence, or the frame header which is a header for storing information on an overall frame, such that the data portion for calculating the error detecting code includes the transmission packet header, and important data element within video-encoded data included in the transmission packet, and has the shortest data length, when the transmission packet includes neither the video sequence header or the frame header, and such that the data portion for calculating the error detecting code includes all encoded data when the transmission packet includes neither the video sequence header or the frame header, and does not include important data elements within the video-encoded data.
